(19) Europäisches Patentamt
European Patent Office
Office européen des brevets

(11) **EP 2 951 232 B1**

(12) **FASCICULE DE BREVET EUROPEEN**

(45) Date de publication et mention de la délivrance du brevet:
**03.01.2018 Bulletin 2018/01**

(21) Numéro de dépôt: **14704760.9**

(22) Date de dépôt: **30.01.2014**

(51) Int Cl.:
*H01B 1/24* (2006.01)          *H01B 1/22* (2006.01)
*C08J 3/00* (2006.01)          *C08J 5/24* (2006.01)
*C08L 63/00* (2006.01)         *C08J 3/22* (2006.01)

(86) Numéro de dépôt international:
**PCT/EP2014/051821**

(87) Numéro de publication internationale:
**WO 2014/118287 (07.08.2014 Gazette 2014/32)**

(54) **MATERIAU COMPOSITE CONDUCTEUR ET METHODE DE FABRICATION DUDIT MATERIAU COMPOSITE CONDUCTEUR**

LEITFÄHIGER VERBUNDWERKSTOFF UND SEIN HERSTELLUNGSVERFAHREN

CONDUCTIVE COMPOSITE MATERIAL AND METHOD FOR PRODUCING IT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.01.2013 FR 1350849**

(43) Date de publication de la demande:
**09.12.2015 Bulletin 2015/50**

(73) Titulaires:
• **Centre National de la Recherche Scientifique 75794 Paris Cedex 16 (FR)**
• **Université du Maine 72000 Le Mans (FR)**

(72) Inventeurs:
• **TASSIN, Jean-François F-72560 Change (FR)**
• **SELLAK, Radouane F-5100 Reims (FR)**
• **NIEPCERON, Frédérick F-72230 Mulsanne (FR)**
• **BENYAHIA, Lazhar F-72100 Le Mans (FR)**

(74) Mandataire: **Osha Liang 2, rue de la Paix 75002 Paris (FR)**

(56) Documents cités:
**US-A- 4 581 158          US-A1- 2002 004 556
US-A1- 2011 163 275       US-B1- 6 197 898
US-B1- 6 331 586**

• **DATABASE WPI Week 201271 Thomson Scientific, London, GB; AN 2012-M67645 XP002710420, & WO 2012/133096 A1 (TORAY IND INC) 4 octobre 2012 (2012-10-04)**
• **DATABASE WPI Week 201154 Thomson Scientific, London, GB; AN 2011-H52618 XP002710421, & CN 102 070 876 A (UNIV GUILIN ELECTRONIC TECHNOLOGY) 25 mai 2011 (2011-05-25)**
• **SHI R; MA C-Q; LIU M: "Selective distribution of carbon black in epoxy resin/thermoplastic multiphase composites", ADVANCED MATERIALS RESEARCH - ADVANCES IN MATERIALS AND MATERIALS PROCESSING, vol. 652-654, 22 décembre 2012 (2012-12-22), - 23 décembre 2012 (2012-12-23), pages 73-76, XP009171701,**
• **MA C; LIU M: "carbon black selective dispersion and electrical properties of epoxy resin/polystyrene/carbon black ternary composites", ADVANCED MATERIALS RESEARCH - MATERIAL AND MANUFACTURING TECHNOLOGY III, vol. 548, 5 mai 2012 (2012-05-05), - 6 mai 2012 (2012-05-06), pages 94-98, XP009171700,**

EP 2 951 232 B1

**Description**

**DOMAINE DE L'INVENTION**

L'invention est relative à des matériaux composites et à leur méthode de fabrication, et concerne notamment des matériaux composites comprenant un composé conducteur.

**DESCRIPTION DE L'ART ANTÉRIEUR**

Les matériaux polymères sont aujourd'hui utilisés pour de nombreuses applications et dans de nombreux domaines, tels que le secteur des transports mais également l'électronique ou l'emballage. Cependant, les matériaux polymères sont naturellement isolants et l'évacuation des charges électriques sur ces matériaux pose problème.

Il est connu, par exemple dans le domaine de l'aéronautique, de déposer, en surface des matériaux polymères, un matériau lui-même conducteur, par exemple un matériau métallique. Cependant, cette solution présente l'inconvénient d'une forte augmentation du poids de l'ensemble, et donc d'une augmentation de la consommation énergétique qui va précisément à l'encontre de l'allègement recherché au travers des matériaux polymères.

Une autre solution consiste à utiliser des polymères intrinsèquement conducteurs. Cependant, leur mise en oeuvre est difficile et leur coût élevé, ce qui restreint leur application dans des matériaux de grande diffusion.

Une différente solution est de créer un réseau des particules fonctionnelles au sein du matériau polymère. Le noir de carbone est connu de longue date pour conférer, au matériau dans lequel il est incorporé, des propriétés d'antistatisme voire de conductivité électrique dès lors que les particules de noir de carbone sont présentes en quantité suffisante pour atteindre leur percolation. WO 99/41304 divulgue des mélanges de thermoplastiques (donc des systèmes non réticulés) formulés avec des charges conductrices localisées soit dans une phase soit à l'interface de deux phases thermoplastiques. Rui Shi, Chuan-guo Ma et Ming Liu (« Selective Distribution of Carbon Black in Epoxy resin/Thermoplastic Multiphase Composites », Advanced Materials Research - Advances in Materials and Materials Processing, vols. 652-654 (2013) pages 73-76) décrivent la dispersion sélective de noir de carbone (CB) dans des composites de polymères conducteurs multiphases de résine epoxy (EP)/polystyrène (PS), polyéthersulfone (PES) et polyétherimide (PEI), les particules de CB étant localisées dans les phases riches en EP et PS pour le composite CB/EP/PS, localisées sélectivement dans la phase riche en PES pour le composite CB/EP/PES, et localisées sélectivement dans la phase riche en PEI pour le composite CB/EP/PEI.

Il est également, par exemple, connu de US 4 581 158 une composition de dispersion thermodurcissable conductrice comprenant un mélange de particules d'un matériau polymère gonflable à sa température de plastification, au moins un plastifiant réactif liquide pour le matériau polymère gonflable, et des particules d'un matériau conducteur électrique et de chaleur. Cette composition est chauffée pendant une durée suffisante pour la plastifier et la cuire pour obtenir un matériau thermodurci conducteur. Par chauffage à la température de cuisson, les particules de polymère sont gonflées par plastification ou solvatation par le plastifiant réactif. Lorsque les particules de polymère contenant le plastifiant réactif gonflent à leur volume maximum, un réseau conducteur de particules conductrices est formé. Le réseau conducteur de particules conductrices et la taille des particules de polymère gonflées deviennent permanents après la polymérisation ou la réticulation du plastifiant réactif.

Cependant, les matériaux contenant un réseau de charges conductrices proposés par l'art antérieur contiennent une fraction importante de telles particules, généralement en une concentration supérieure à 40% en masse du matériau, et présentent donc de mauvaises propriétés mécaniques et ne sont pas économiques. De plus, leur présence conduit à une augmentation forte de viscosité qui limite leur domaine d'utilisation.

Par exemple, dans le cas spécifique de l'obtention par infusion d'un matériau fonctionnel composite à base de matériau polymère, cette solution est à exclure car un tel ajout de particules conductrices entraîne l'augmentation de la viscosité du matériau polymère qui devient trop importante pour être compatible avec l'infusion du matériau polymère sur un renfort.

La présente invention a pour but de proposer un matériau conducteur ayant de bonnes caractéristiques de conductivité électrique et d'antistatisme tout en ne contenant qu'une faible concentration de composé conducteur afin de permettre éventuellement l'infusion d'une trame fibreuse pour l'obtention de composites renforcés et conducteurs.

**RESUME DE L'INVENTION**

Un objet de la présente invention est celui de fournir des matériaux du type à base d'un composé thermodurci, d'un composé thermoplastique et d'un composé conducteur permettant d'évacuer les charges électriques. Dans cette perspective, le Demandeur a avantageusement trouvé qu'un matériau, présentant deux phases co-continues, dans lequel le composé conducteur forme un réseau percolant où les charges conductrices sont localisées aux interfaces entre les deux phases permet de remplir cet objet avec une faible teneur en charges conductrices.

Dans la présente description et dans les revendications qui suivent, les termes "composé thermodurcissable" sont utilisés en référence à un composé pouvant devenir solide par réaction chimique sous l'action de la chaleur. Dans le cas d'un composé polymère, cette solidification peut être effectuée par polymérisation et/ou réticulation du polymère.

Dans la présente description et dans les revendications qui suivent, les termes "composé thermodurci" sont utilisés en référence à un composé thermodurcissable ayant subi un traitement thermique ayant entraîné sa solidification.

Dans la présente description et dans les revendications qui suivent, les termes "composé thermoplastique" sont utilisés en référence à un composé qui se ramollit sous l'effet de la chaleur et se durcit en se refroidissant de manière réversible.

Dans la présente description et dans les revendications qui suivent, les termes "réseau percolant" sont utilisés en référence au réseau formé par les particules conductrices agencées de telle façon qu'elles peuvent percoler et permettre le transport d'électrons.

Selon un premier aspect de la présente invention, ledit objet est rempli par un matériau conducteur comprenant une première phase incluant un composé thermodurci, une seconde phase, minoritaire en volume, incluant un composé thermoplastique, et un composé conducteur, dans lequel la seconde phase est dispersée dans la première phase, les deux phases sont bi-continues, et le composé conducteur est localisé à l'interface entre les première et seconde phases.

Dans la présente description et dans les revendications qui suivent, les termes "phases bi-continues" ou "phases co-continues" sont utilisés en référence à un mélange de deux phases séparées, chacune présentant une continuité, créant deux systèmes interpénétrés l'un dans l'autre.

Dans un mode de réalisation préféré, la première et la seconde phases sont continues.

Dans un mode de réalisation préféré, le composé conducteur forme un réseau percolant à l'interface entre les première et seconde phases.

Avantageusement, la création d'un réseau percolant du composé conducteur permet d'obtenir un matériau conducteur ayant de bonnes propriétés de conductivité électrique et d'antistatisme tout en contenant une faible concentration de composé conducteur.

Le composé thermodurci comprend tout matériau adapté connu de l'homme du métier. Dans un mode de réalisation préféré, le composé thermodurci comprend une résine thermodurcie. Dans un mode de réalisation préféré, la résine thermodurcie comprend le produit de réaction d'un mélange d'une résine et d'un durcisseur.

La résine peut comprendre tout système présentant lors de la cuisson une augmentation de sa masse molaire, impliquant ou non une réticulation. Dans un mode de réalisation préféré, la résine comprend au moins l'une d'une résine époxy, d'une résine polyester (acide/polyol), d'une résine polyuréthane (polyol/di-isocyanate), d'une résine phénol-formaldéhyde, ou d'une urée-formaldéhyde. La résine époxy est de préférence à base de DGEBA (diglycidyléther du bisphénol A), à base de para-aminophénol ou une résine époxyde Novolaque.

Dans un mode de réalisation préféré, le durcisseur comprend au moins l'un durcisseur de type amine, un anhydride d'acide, un acide de Lewis, un phénol et tout type d'agent réticulant par photochimie. Dans un mode de réalisation préféré, le durcisseur de type amine comprend au moins l'un du MCDEA (4,4'-méthylène-bis 3-chloro-2,6-diéthylaniline), un DDM (diamino diphénylmethane), un DDS (diaminodiphenylsulfone) et tout type de dérivés aminés.

Dans un mode de réalisation préféré, la résine époxy comprend un système époxy/amine, tel qu'une résine à base de DGEBA (diglycidyléther du bisphénol A) et d'un durcisseur MCDEA (4,4'-méthylène-bis 3-chloro-2,6-diéthylaniline).

Dans un mode de réalisation préféré, le mélange résine époxy/durcisseur est choisi parmi le groupe de couples de précurseurs consistant en le couple epoxy/amine, le couple epoxy/acide, le couple epoxy/anhydride, le couple epoxy/phénol et un mélange de ces composés.

Dans un mode de réalisation préféré, le matériau comprend de 50 à 97 % en masse de résine thermodurcie.

La forme du composé conducteur peut être toute forme adaptée et connue de l'homme du métier. Dans un mode de réalisation préféré, le composé conducteur est sous au moins l'une des formes suivantes : particules individualisées ou agrégées de formes variées ; sphères ou assimilées (3 dimensions principales du même ordre de grandeur), plaquettes (2 dimensions grandes devant la troisième), nanofils ou nanotubes (1 dimension grande devant les deux autres). Dans un mode de réalisation préféré, le composé conducteur est sous forme de particules sphériques ou assimilées.

Le composé conducteur est de toute taille adaptée et connue de l'homme du métier. Dans un mode de réalisation préféré, le composé conducteur a une taille moyenne comprise entre 5 nm et 5 $\mu$m, de préférence entre 5 et 1000 nm, et de préférence entre 5 et 200 nm.

Le composé conducteur comprend tout matériau adapté connu de l'homme du métier. Dans un mode de réalisation préféré, le composé conducteur comprend au moins l'un du carbone, du noir de carbone, des nanotubes de carbone à simple paroi, double paroi ou multiparois, éventuellement liés entre eux, du graphite, du graphène, des oxydes, généralement sous forme de poudres ou de bâtonnets, comme de l'oxyde d'antimoine et d'étain, d'indium et d'étain, ou de l'oxyde de zinc, du carbure de silicium, des poudres métalliques à base d'aluminium ou d'un métal de transition, tel que le cuivre, l'argent, le molybdène, le nickel ou l'or, d'un polymère conducteur intrinsèque tel que la polyaniline, le poly(3,4-ethylenedioxythiophene), ou le polypyrrole. Dans un mode de réalisation préféré, le composé conducteur comprend du noir de carbone. Dans un autre mode de réalisation préféré, le composé conducteur est constitué de particules de métaux de transition.

Le matériau conducteur comprend toute concentration de composé conducteur adaptée et connue de l'homme du métier permettant d'obtenir un réseau percolant dudit composé conducteur. La concentration en matériau conducteur dépend du composé choisi, de sa forme et de sa taille.

Dans un mode de réalisation préféré, le matériau conducteur comprend moins de 15 % en masse de composé conducteur, de préférence moins de 5 % en masse de composé conducteur. Dans un mode de réalisation préféré, le matériau conducteur comprend de 0,1 à 5 % en masse de composé conducteur, et de préférence de 1 à 5 % en masse de composé conducteur. Dans la présente description et dans les revendications qui suivent, les concentrations massiques des composés sont exprimées par rapport à la masse totale des composés thermoplastique, thermodurcissable et conducteur.

Le composé thermoplastique comprend tout matériau adapté connu de l'homme du métier. Dans un mode de réalisation préféré, le composé thermoplastique comprend au moins un polymère. Dans un mode de réalisation préféré, le composé thermoplastique comprend au moins l'un du polystyrène (PS), du polystyrène choc (HIPS), du copolymère à bloc polystyrène-polybutadiène (PS-bloc-PBu), du poly(éther-imide), du poly(éther-éther-cétone), du polycarbonate, du polysulfone, et d'un polymère thermoplastique appartenant à la famille des styréniques, à celle des acrylates ou méthacrylates comme le polyméthacrylate de méthyle, à celle des polyesters comme le polycaprolactone ou le polyéthylène téréphtalate, ou à celle des vinyliques comme le polyéthylène, ou des copolymères de ceux-ci. Dans un mode de réalisation préféré, le composé thermoplastique comprend du polystyrène.

Dans un mode de réalisation préféré, le composé thermoplastique comprend au moins un polymère de masse molaire comprise entre 1000 et 500 000 g.mol$^{-1}$, de préférence entre 100 000 et 200 000 g.mol$^{-1}$.

Dans un mode de réalisation préféré, le composé thermoplastique est soluble dans le composé thermodurcissable. Une augmentation de la température, lors du mélange du composé thermoplastique dans le composé thermodurcissable, peut faciliter cette dissolution. Le composé thermoplastique et le composé thermodurcissable sont choisis de manière à former une solution homogène et limpide au-dessus de la température critique supérieure de dissolution (UCST) ou en dessous de la température critique inférieure de dissolution (LCST). Ces températures varient selon le système choisi. Comme connu de l'homme de métier, la dissolution du composé thermoplastique dans le composé thermodurcissable peut s'avérer difficile voire impossible si le composé thermoplastique possède un taux de cristallinité important.

Le matériau conducteur comprend toute concentration de composé thermoplastique adaptée et connue de l'homme du métier. Dans un mode de réalisation préféré, le matériau conducteur comprend de 5 à 30 % en masse de composé thermoplastique, et de préférence de 12 à 13 % en masse de composé thermoplastique.

Dans un mode de réalisation préféré, la première phase du matériau conducteur peut comprendre au moins un additif, tel qu'un additif permettant d'améliorer les propriétés du matériau. Dans un mode de réalisation préféré, l'additif permettant d'améliorer les propriétés du matériau comprend au moins un sel inorganique. Dans un mode de réalisation préféré, le sel inorganique est un sel de cuivre. Dans un mode de réalisation préféré, le sel inorganique est au moins l'un du CuBr$_2$ et du CuCl$_2$.

Le matériau conducteur comprend toute concentration d'additif adaptée et connue de l'homme du métier. Dans un mode de réalisation préféré, le matériau conducteur comprend de 0,1 et 500 µmol.g$^{-1}$, de préférence de 10 et 100 µmol.g$^{-1}$, et de préférence de 10 et 30 µmol.g$^{-1}$ de la masse totale du matériau conducteur.

Avantageusement, le matériau conducteur selon la présente invention contient une faible concentration de composé conducteur tout en ayant de bonnes caractéristiques de conductivité électrique et d'antistatisme.

Dans un mode de réalisation préféré, le matériau selon la présente invention présente une conductivité électrique comprise entre 10$^{-10}$ et 10$^2$ S.cm$^{-1}$, de préférence entre 10$^{-8}$ et 10$^2$ S.cm$^{-1}$ et de préférence entre 10$^{-6}$ et 10$^{-1}$ S.cm$^{-1}$.

Dans un mode de réalisation préféré, le composé conducteur est initialement présent dans au moins l'une des première et seconde phases. Dans un mode de réalisation préféré, chacune des premières et secondes phases comprend moins de 50 % en masse de composé conducteur, de préférence moins de 30 % en masse de composé conducteur.

Dans un mode de réalisation préféré, le matériau conducteur comprend en outre un renfort. Dans un mode de réalisation préféré, le renfort est au moins l'un d'un tramage de fibres, d'un matériau poreux. Dans un mode de réalisation préféré, le renfort comprend un tramage de fibres, les fibres comprenant au moins l'un de fibres de carbone, de verre, d'aramide. Dans un mode de réalisation préféré, le renfort comprend un tramage de fibres de carbone.

Un autre aspect de la présente invention concerne une méthode de fabrication d'un matériau conducteur comprenant les étapes suivantes :

  a) mélanger un composé conducteur et un composé thermoplastique à l'état fondu ;
  b) mélanger le mélange obtenu à l'étape a) avec un composé thermodurcissable ; et
  c) durcir le composé thermodurcissable et séparer le mélange obtenu à l'étape b) en une seconde phase incluant le composé thermoplastique dispersée dans une première phase incluant le composé thermodurcissable, les phases étant bi-continues et le composé conducteur étant localisé à l'interface des première et seconde phases.

La méthode de fabrication du matériau conducteur selon l'invention comprend des étapes préférées qui sont exécutées afin d'obtenir un matériau conducteur selon un ou plusieurs modes de réalisation préférés décrits ci-dessus.

Lors de la séparation de phases, le composé conducteur, naturellement attiré par le caractère polaire du composé thermodurcissable, migre de la phase incluant le composé thermoplastique vers la phase incluant le composé thermodurcissable. Avantageusement, le mélange du composé thermoplastique et du composé conducteur, préalable au mélange avec le composé thermodurcissable, permet un enrobage du composé conducteur par le composé thermoplastique. Ainsi, lors de sa migration, le composé conducteur va se concentrer à l'interface entre les deux phases à laquelle il donne de la stabilité et donc ne va pas passer dans la phase incluant le composé thermodurcissable.

Dans l'étape a), lors de son mélange avec le composé conducteur, le composé thermoplastique est à l'état fondu. Le mélange de l'étape a) est donc réalisé à une température supérieure à la température de fusion du composé thermoplastique choisi.

Le mélange du composé conducteur et d'un composé thermoplastique peut être réalisé par toute méthode adaptée et connue de l'homme du métier. Dans un mode de réalisation préféré, le mélange de l'étape a) est effectué dans un mélangeur ou une extrudeuse en appliquant un cisaillement permettant de disperser au mieux les particules conductrices. Avantageusement, le fait de mélanger le composé thermoplastique et le composé conducteur sous cisaillement permet de casser les agrégats de composé conducteur et de réaliser ainsi un mélange homogène.

Dans un mode de réalisation préféré, le mélange du composé conducteur et du composé thermoplastique est réalisé dans une extrudeuse.

Dans un mode de réalisation préféré, le mélange du composé conducteur et du composé thermoplastique est effectué à un taux de cisaillement de 1 à 1000 s$^{-1}$, de préférence de 10 à 1000 s$^{-1}$ et de préférence de 300 à 700 s$^{-1}$.

Dans un mode de réalisation préféré, le mélange de l'étape b) est effectué sous agitation, de préférence comprise entre 10 et 1000 tr.min$^{-1}$, de préférence entre 10 et 500 tr.min$^{-1}$.

Dans un mode de réalisation préféré, l'étape b) consiste à dissoudre le mélange réalisé à l'étape a) dans le composé thermodurcissable. Les conditions du mélange doivent être choisies en fonction des composants mis en oeuvre tout en évitant de démarrer la réaction de réticulation du composé thermodurcissable lors de cette étape.

Dans un mode de réalisation préféré, le mélange de l'étape b) est effectué à une température comprise entre 70 et 200°C, de préférence entre 70 et 150°C. Dans un mode de réalisation préféré, la dissolution des composés est facilité en introduisant un solvant commun qui est ultérieurement évaporé.

Dans un mode de réalisation préféré, l'étape c) comprend en outre l'ajout d'un durcisseur. Dans un mode de réalisation préféré, le durcisseur est ajouté après la dissolution totale du mélange réalisé à l'étape a) dans le composé thermodurcissable.

Le durcissement du composé thermodurcissable et la séparation de phases sont effectués simultanément par une séparation de phase induite par réaction ou RIPS (Reaction Induced Phase Separation).

Le processus de séparation de phase peut-être expliqué de façon simplifiée par une approche théorique suivant le modèle de Flory-Huggins exprimé par l'équation suivante.

$$\frac{\Delta G}{RT} = \frac{\phi_{TD}}{Z_{TD}} \ln \phi_{TD} + \frac{\phi_{TP}}{Z_{TP}} \ln \phi_{TP} + \chi \phi_{TD} \phi_{TP}$$

dans laquelle:

$\Delta G$ est l'enthalpie libre du mélange ;
R est la constante des gaz parfaits ;
T est la température ;
$\Phi_{TD}$ est la fraction volumique du composé thermodurcissable ;
$\Phi_{TP}$ est la fraction volumique du composé thermoplastique ;
$\chi$ est le paramètre d'interaction ;
$Z_{TD}$ est le rapport du volume molaire du composé thermoplastique sur le volume molaire de la fraction ayant le plus faible volume molaire du composé thermoplastique ;
$Z_{TP}$ est le rapport du volume molaire du composé thermodurcissable sur le volume molaire de la fraction ayant le plus faible volume molaire du composé thermo durcissable.

Le mélange obtenu à l'étape b) est homogène. Pendant la réaction de durcissement, une séparation de phases est induite par la variation de l'enthalpie libre de mélange ($\Delta$G). En effet l'équation de Flory-Huggins montre que lors de la cuisson, c'est-à-dire de l'augmentation de la masse molaire du composé thermodurcissable, la miscibilité des composés thermoplastique et thermodurcissable va diminuer en raison de la baisse de l'entropie de mélange représentée par les deux premiers termes de l'équation ci-dessus. Dans le cas où la cuisson s'effectue à température constante, on mesure la conversion du système thermodurcissable pour différentes compositions en thermoplastique. Le diagramme de phase ainsi obtenu présente un minimum qui correspond à la concentration critique en phase thermoplastique pour laquelle la morphologie finale du mélange est formée de deux phases co-continues.

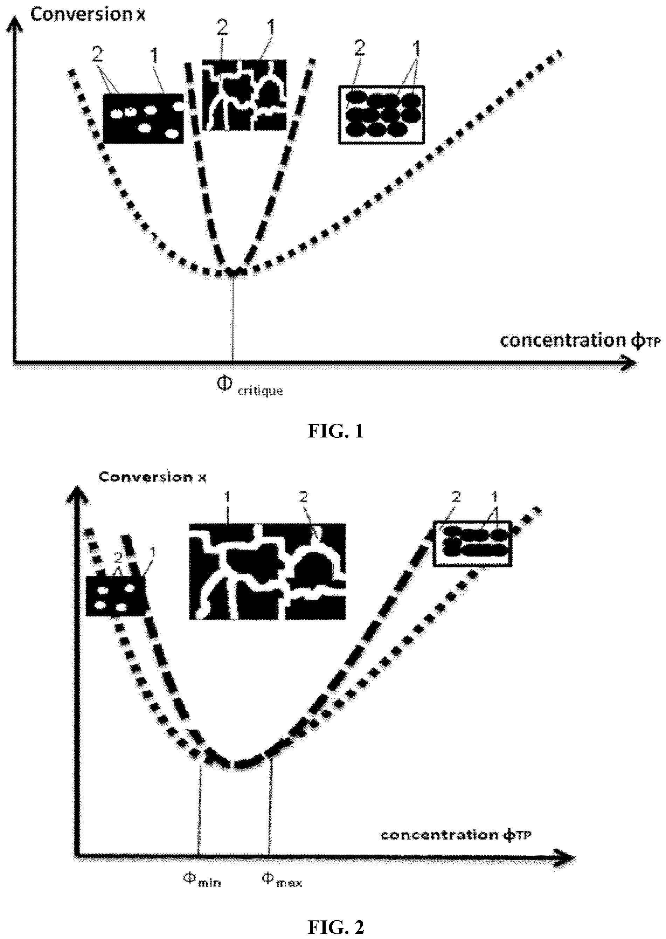

La Figure 1 représente un diagramme de phase avec en abscisse la concentration du composé thermoplastique et en ordonnée la conversion x.

Comme illustré sur la Figure 1, immédiatement après la séparation de phase, deux types de décomposition apparaissent : une décomposition binodale illustrée par une ligne à petits pointillés et une décomposition spinodale illustrée par une ligne à long pointillés. Les morphologies formées par ces deux types de décomposition sont très différentes : la séparation de phase par décomposition binodale conduit à une phase sous forme de nodules sphériques 2 dispersés dans une autre phase 1, alors que la séparation de phase par décomposition spinodale conduit à une structure co-continue de deux phases 1, 2.

La concentration en composé thermoplastique critique ($\Phi_{critique}$) représente la concentration en composé thermoplastique nécessaire pour obtenir deux phases co-continues, pour une température donnée, un composé thermodurcissable spécifique et un composé thermoplastique spécifique.

Il est possible, selon les conditions expérimentales, d'obtenir deux phases co-continues nécessaires pour la propriété de conduction électrique, sans passer rigoureusement par le point critique. Il faut toutefois ne pas avoir atteint la gélification de la phase thermo durcissable.

En pratique, tel qu'il est illustré sur la Figure 2, la concentration en composé thermoplastique correspond à une plage de valeur de $\pm$ 5 % en masse (valeur absolue) autour du $\Phi_{critique}$ théorique, de préférence de $\pm$ 1 % en masse (valeur absolue) dans le domaine $\Phi_{min} < \Phi < \Phi_{max}$. La concentration critique en composé thermoplastique dépend, outre de la nature chimique du thermoplastique et du thermodurcissable, de la masse molaire du thermoplastique.

L'étape c) est réalisée à une température qui dépend du système choisi. La température doit permettre la tenue des réactions chimiques de formation du réseau thermodurci et de garder une viscosité importante de la phase thermoplastique. Dans un mode de réalisation préféré, l'étape c) est effectuée, de préférence dans un moule, à une température comprise entre 50 et 500°C, de préférence entre 70 et 180 °C, et de préférence entre 70 et 120 °C.

La durée de réaction de l'étape c) dépend du système considéré et de la température. Dans un mode de réalisation préféré, l'étape c) est effectuée pendant une durée de 0,1 à 24 h, de préférence de 0,1 à 15h, et de préférence de 0,1 à 5 h. Dans un mode de réalisation préféré, l'étape c) est effectuée pendant une durée de 5 à 10 h.

Dans un mode de réalisation préféré, le durcissement est effectué par réticulation ou polymérisation du matériau thermodurcissable.

Dans un mode de réalisation préféré, la méthode selon l'invention comprend en outre une étape d'infusion du mélange obtenu à l'étape b) sur un renfort. L'étape c) est alors conduite en présence du renfort.

## BRÈVE DESCRIPTION DES DESSINS

L'invention va maintenant être décrite en référence aux dessins annexés dans lesquels les Figures ne sont pas à l'échelle et les dimensions de certains éléments sont agrandies à des fins illustratives, et dans lesquels

- les Figures 1 et 2 sont des graphiques illustrant le diagramme de phase d'un mélange,
- la Figure 3 représente une vue schématique en coupe d'un matériau conducteur selon l'invention,
- les Figures 4a et 4b illustrent un matériau selon l'art antérieur : la Figure 4a est une vue obtenue au microscope optique entre lame et lamelle, et la Figure 4b est une vue au microscope optique d'une coupe d'un échantillon massif.
- la Figure 5 est un graphique représentant la conductivité électrique de matériaux selon l'art antérieur pour deux concentrations en particules conductrices,
- la Figure 6 illustre l'évolution de la morphologie, observée en film mince sous microscope optique, lors du durcissement et de la séparation de phase d'un matériau selon l'invention,
- les Figures 7a à 7c sont des vues, observées en film mince sous microscope optique de matériaux selon la présente invention contenant une concentration croissante en particules conductrices,
- la Figure 8 illustre des coupes de matériaux selon l'invention réalisés dans un moule observées par microscopie optique contenant une concentration croissante en particules conductrices,
- la Figure 9 correspond à une vue en coupe d'un matériau observé par microscopie optique selon l'invention en présence d'un sel inorganique,
- la Figure 10 est une micrographie obtenue par microscopie électronique à transmission du matériau de la Figure 9,

- la Figure 11 illustre la conductivité électrique de matériaux selon l'invention,
- la Figure 12 correspond à un cliché de microscopie optique d'un matériau selon la présente invention,
- la Figure 13 correspond à des clichés de microscopie électronique à transmission du matériau de la Figure 12,
- la Figure 14 correspond à des clichés de microscopie optique d'un matériau selon l'invention, et
- la Figure 15 correspond à des vues en coupe d'un matériau observé par microscopie optique selon l'invention.

## DESCRIPTION DÉTAILLÉE DE MODES DE REALISATION PRÉFÉRÉS

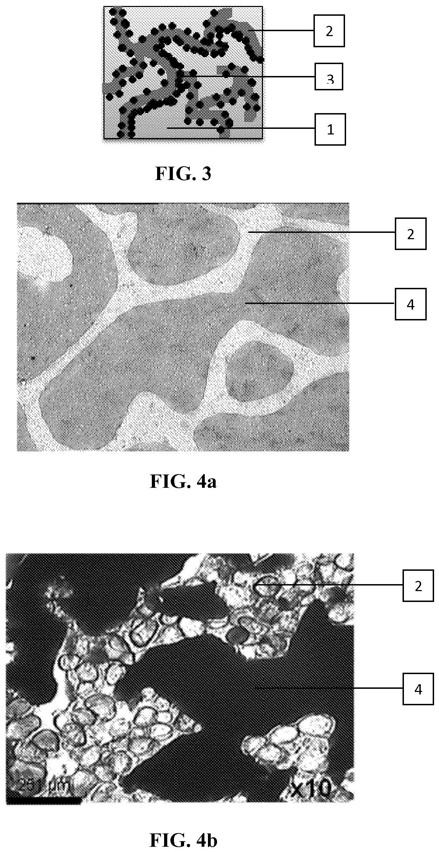

La Figure 3 est une vue schématique en coupe d'un matériau selon l'invention. Ce matériau comprend une première phase 1 incluant un composé thermodurci, une seconde phase 2 incluant un composé thermoplastique , et un composé conducteur 3. La seconde phase 2 est dispersée dans la première phase 1, les deux phases 1 et 2 sont bi-continues, et le composé conducteur 3 est localisé à l'interface entre les première et seconde phases 1 et 2.

EXEMPLES

Art antérieur

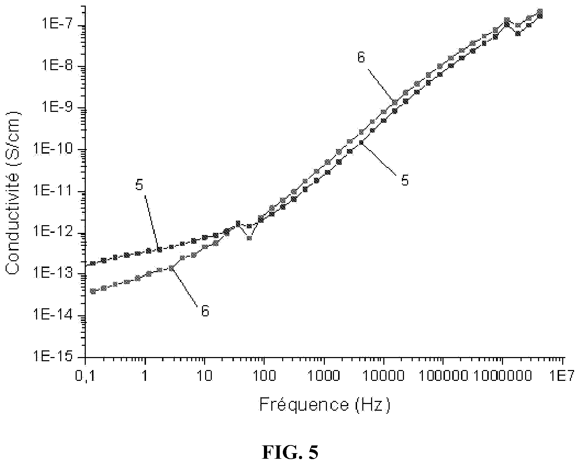

Les Figures 4a et 4b illustrent un matériau selon l'art antérieur. Ce matériau comprend une résine à base de DGEBA-MCDEA, 10% en masse de polystyrène et 2,5% en masse de noir de carbone. Ce matériau n'est pas obtenu par un mélange du polystyrène et du noir de carbone à l'état fondu préalablement au mélange à la résine comme prévu par la présente invention. Ce matériau a en revanche été obtenu par un procédé de mélange en une étape. En effet la phase thermoducissable, la phase thermoplastique et le noir de carbone ont été mélangés en même temps. Il est visible sur les Figures 4a et 4b que le polystyrène et la résine se sont séparés en deux phases co-continues : une phase 2 comprenant le polystyrène et une phase 4 comprenant la résine. Cependant, le noir de carbone est localisé dans la phase 4 incluant la résine et non à l'interface entre les deux phases. Il n'y a donc pas de création d'un réseau percolant du noir de carbone et, comme illustré sur la Figure 5, la conductivité électrique du matériau est très basse.
La conductivité électrique du matériau des Figures 4a et 4b est illustrée sur la Figure 5 par la courbe 5 et est de l'ordre de $10^{-14}$ S.cm$^{-1}$.
La Figure 5 illustre également, par la courbe 6, la conductivité électrique d'un autre matériau obtenu par le même procédé que le matériau des Figures 4a et 4b mais comprenant 5 % en masse de noir de carbone. La conductivité électrique d'un tel matériau est de l'ordre de $10^{-13}$ S.cm$^{-1}$.
Il est observé que la conductivité du matériau selon l'art antérieur est peu affectée par la teneur en noir de carbone.

Invention

Ex.1/ Un premier matériau a été préparé avec une résine époxy DGEBA-MCDEA considérés dans des conditions stoechiométriques (soit par exemple 10 g de DGEBA et 5,5 g de MCDEA), 12,5% en masse de polystyrène de masse molaire 200 000 g.mol$^{-1}$ et 1,8% en masse de noir de carbone (Conductex 7055 Ultra, Columbian Chemicals, taille 42nm).
Le noir de carbone et le polystyrène ont été mélangés à l'état fondu pendant 10 minutes à une température de 200°C et avec un taux de cisaillement de 520 s$^{-1}$. Puis, le mélange ainsi obtenu a été mélangé à de la résine époxy sous agitation à une température de 80°C. Enfin, l'ensemble a été traité en film mince et observé sous microscope optique à une température de 180°C.

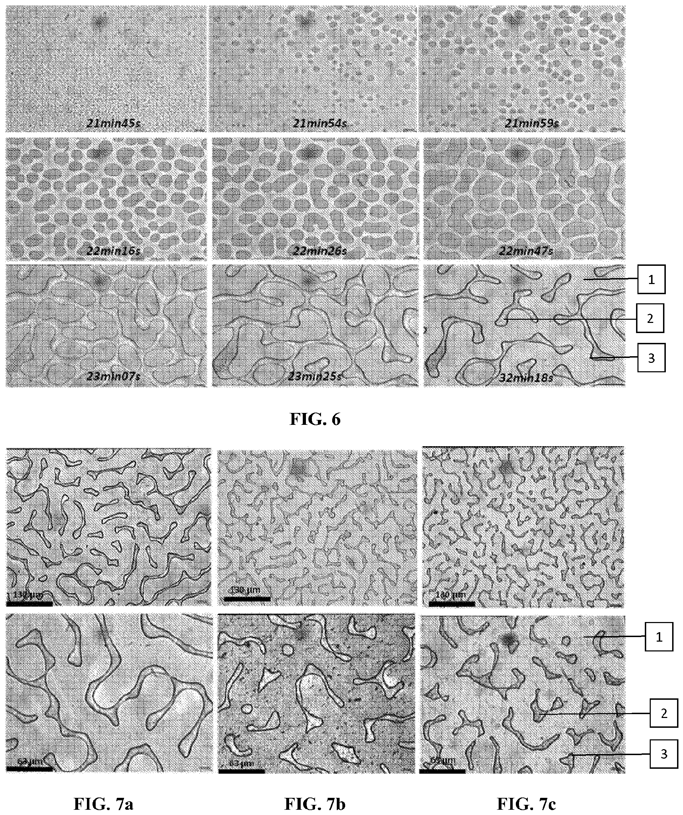

La Figure 6 illustre l'évolution de la morphologie du matériau lors du traitement thermique, par une succession de clichés obtenus par microscopie optique avec un grossissement x40. La formation des deux phases 1, 2 co-continues est très clairement visible, tout comme la migration du noir de carbone 3 de la phase 2 incluant le polystyrène vers l'interface entre les deux phases 1, 2.
Ex.2/ Trois autres matériaux ont été préparés avec une résine à base de DGEBA/MCDEA (dans des proportions stoechiométriques), 12,5% en masse de polystyrène 200 000 g.mol$^{-1}$ et respectivement 2,4%, 3,8% et 5,5% en masse de noir de carbone.
Le noir de carbone et le polystyrène ont été mélangés à l'état fondu à une température de 200°C et avec un taux de cisaillement de 520 s$^{-1}$. Puis, le mélange ainsi obtenu a été mélangé au DGEBA/MCDEA sous agitation à une température de 80°C. Enfin, l'ensemble a été traité en film mince et observé sous microscope optique à une température de 90°C. Le même mélange a également été introduit dans un moule et traité à 90°C, conduisant à des échantillons massifs sur lesquels des coupes peuvent être effectuées.
Les Figures 7a à 7c illustrent la localisation du noir de carbone 3 à l'interface entre les deux phases 1, 2 ainsi que la diminution de la taille des domaines associée à l'augmentation du taux de noir de carbone. La Figure 7a illustre le matériau contenant 2,4% en masse de noir de carbone, la Figure 7b illustre le matériau contenant 3,8% en masse de noir de carbone et la Figure 7c illustre le matériau contenant 5,5% en masse de noir de carbone.

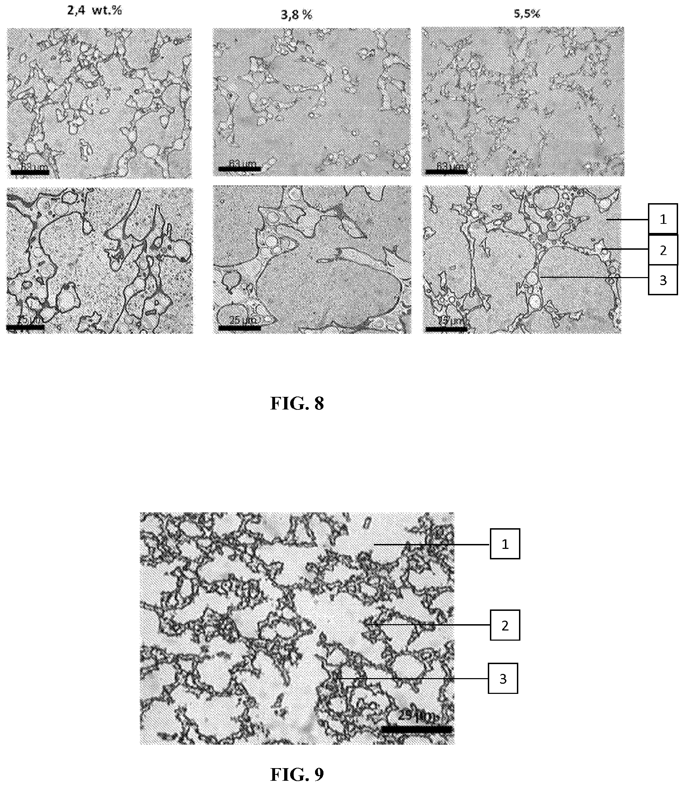

La Figure 8 illustre la morphologie observée par des clichés obtenus par microscopie optique avec deux grossissements différents des matériaux obtenus,. La formation des deux phases 1, 2 co-continues est très clairement visible. Le noir de carbone 3 est clairement localisé aux interfaces du système thermoplastique/thermodurcissable mais une fraction reste dispersée de manière homogène dans la phase thermodurcie 1.

<u>Ex.3/</u> Un matériau a été préparé avec une résine époxy DGEBA-MCDEA, 13% en masse de polystyrène 200 000 g.mol$^{-1}$ avec 5,4% en masse de noir de carbone de 40 nm en présence d'un additif, CuBr$_2$ avec 0,05% en masse.

Le noir de carbone et le polystyrène ont été mélangés à l'état fondu à une température de 200°C et avec un taux de cisaillement de 520 s$^{-1}$. Puis, le mélange ainsi obtenu a été mélangé à la résine époxy et à l'additif sous agitation à une température de 80°C. Enfin, l'ensemble a été traité dans un moule à une température de 90°C.

La Figure 9 illustre la morphologie du matériau obtenu, par un cliché obtenu par microscopie optique. La formation des deux phases 1, 2 co-continues est très clairement visible, tout comme la migration du noir de carbone 3 de la phase incluant le polystyrène vers l'interface entre les deux phases 1, 2. Il est également clairement visible que la phase thermodurcie 1 est dépourvue de noir de carbone contrairement aux cas des matériaux obtenus dans l'exemple 2.

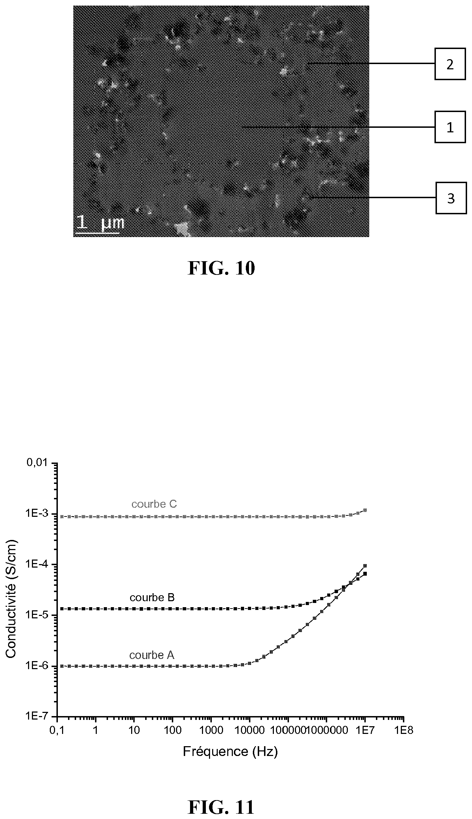

La Figure 10, représentant un cliché de microscopie électronique à transmission, permet de se rendre compte que les charges sont localisées uniquement aux interfaces du système thermoplastique/thermodurcissable.

La Figure 11 (courbe A), montrant la caractérisation diélectrique du matériau élaboré selon l'exemple 3 permet de conclure qu'un matériau conducteur peut être obtenu et que la conductivité électronique est de 10$^{-6}$ S/cm.

<u>Ex.4/</u> Un autre matériau a été préparé avec une résine à base de DGEBA/benzylamine (dans des proportions stoechiométriques), contenant 12,5% en masse de polystyrène 200 000 g.mol$^{-1}$ et une masse de noir de carbone de 4%.

Le noir de carbone et le polystyrène ont été mélangés à l'état fondu à une température de 200°C et avec un taux de cisaillement de 520 s$^{-1}$. Puis, le mélange ainsi obtenu a été mélangé au DGEBA/benzylamine sous agitation à une température de 80°C. Enfin, l'ensemble a été traité dans un moule à une température de 90°C.

La Figure 11 (courbe B), montrant la caractérisation diélectrique du matériau élaboré selon l'exemple 4, permet de conclure que la conductivité électronique est de l'ordre de 10$^{-5}$ S/cm.

<u>Ex.5/</u> Un matériau a été préparé avec une résine à base de DGEBA/MCDEA-Benzylamine (dans des proportions stoechiométriques avec 75% MCDEA-25% Benzylamine), incluant 13% en masse de polystyrène 200 000 g.mol$^{-1}$ et une masse de noir de carbone de 5,2%.

Le noir de carbone et le polystyrène ont été mélangés à l'état fondu à une température de 200°C et avec un taux de cisaillement de 520 s$^{-1}$. Puis, le mélange ainsi obtenu a été mélangé au DGEBA/ MCDEA-Benzylamine sous agitation à une température de 80°C. Enfin, l'ensemble a été traité dans un moule à une température de 170°C.

La Figure 11 (courbe C), montrant la caractérisation diélectrique du matériau élaboré selon l'exemple 5, permet de conclure que la conductivité électronique est de l'ordre de 10$^{-3}$ S/cm.

<u>Ex.6/</u> Un matériau a été préparé avec une résine époxy DGEBA-MCDEA, incluant 12,5% en masse de polystyrène 200 000 g.mol$^{-1}$ et une masse de nanoparticules d'argent, d'une taille de l'ordre de 25 nm, de 1,3%.

Les nanoparticules d'argent et le polystyrène ont été mélangés à l'état fondu à une température de 200°C et avec un taux de cisaillement de 520 s$^{-1}$. Puis, le mélange ainsi obtenu a été mélangé à la résine époxy DGEBA-MCDEA sous agitation à une température de 120°C. Enfin, l'ensemble a été traité dans un moule à une température de 90°C.

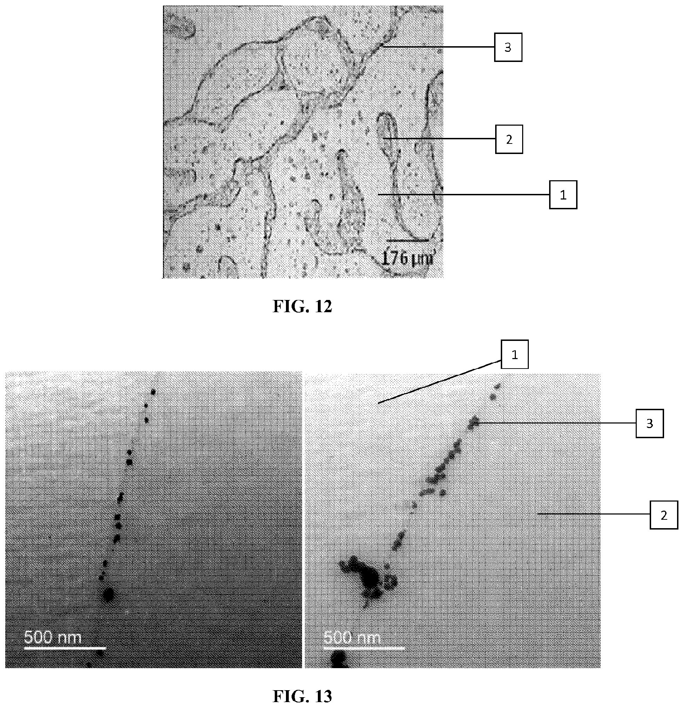

Les Figures 12 et 13, représentant respectivement un cliché de microscopie optique et des clichés de microscopie électronique à transmission, permettent de se rendre compte que les charges sont localisées aux interfaces du système thermoplastique/thermodurcissable.

<u>Ex.7/</u> Un matériau a été préparé avec une résine époxy DGEBA-MCDEA, incluant 12,5% en masse de polystyrène 200 000 g.mol$^{-1}$ et une masse de particules de carbure de silicium, ayant un diamètre d'environ 20 nm, de 3%.

Le carbure de silicium et le polystyrène ont été mélangés à l'état fondu à une température de 200°C et avec un taux de cisaillement de 520 s$^{-1}$. Puis, le mélange ainsi obtenu a été mélangé à la résine époxy DGEBA-MCDEA sous agitation à une température de 120°C. Enfin, l'ensemble a été traité dans un moule à une température de 90°C.

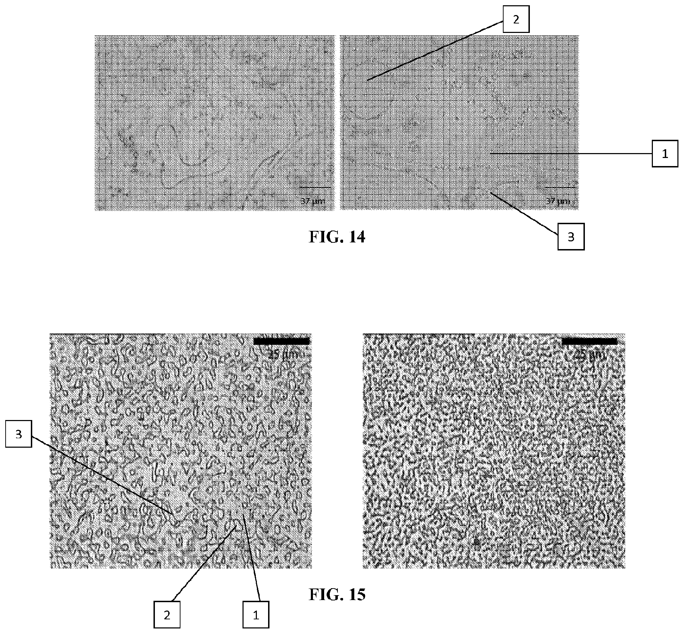

La Figure 14, représentant des clichés de microscopie optique, permet de se rendre compte que les charges sont préférentiellement localisées aux interfaces du système thermoplastique/thermodurcissable.

<u>Ex.8/</u> Un matériau a été préparé avec une résine époxy DGEBA-DDS, incluant 10% en masse de polycaprolactone 50 000 g.mol$^{-1}$ et une masse de noir de carbone de 1%.

Le noir de carbone et le polycaprolactone ont été mélangés à l'état fondu à une température de 200°C et avec un taux de cisaillement de 520 s$^{-1}$. Puis, le mélange ainsi obtenu a été mélangé à la résine époxy DGEBA-DDS sous agitation à une température de 120°C. Enfin, l'ensemble a été traité dans un moule à une température de 170°C.

La Figure 15, représentant des clichés de microscopie optique, permet de se rendre compte que les charges sont préférentiellement localisées aux interfaces du système thermoplastique/thermodurcissable.

Le même phénomène de localisation préférentielle des charges aux interfaces du système thermoplastique/thermodurcissable a été observé pour un matériau préparé dans les mêmes conditions mais contenant une masse de noir de carbone de 2%.

L'invention ainsi décrite présente entre autres les avantages suivants.

Les matériaux conducteurs selon l'invention présentent de bonnes caractéristiques d'antistatisme ou de conductivité électrique tout en ne contenant qu'une faible concentration de composé conducteur. Ces matériaux ont de nombreuses applications, notamment sur des surfaces où une évacuation de charge électrique est nécessaire, mais également pour isoler un environnement d'un rayonnement électromagnétique.

L'invention a été décrite dans des exemples particuliers de réalisation illustrés par les différentes figures qui ne sont pas limitants. Des formes de réalisation supplémentaires peuvent être envisagées par l'homme du métier comme, par exemple, le choix des composés thermoplastique, thermodurcissable et conducteur, et de leurs concentrations.

**Revendications**

1. Matériau conducteur comprenant :

   - une première phase incluant un composé thermodurci,
   - une seconde phase, minoritaire en volume, incluant un composé thermoplastique, et
   - un composé conducteur,

   dans lequel :

   - la seconde phase est dispersée dans la première phase,
   - les deux phases sont bi-continues, et
   - le composé conducteur est localisé à l'interface entre les première et seconde phases.

2. Matériau selon la revendication 1, dans lequel le composé thermodurci comprend une résine thermodurcie.

3. Matériau selon la revendication 2, dans lequel la résine thermodurcie comprend le produit de réaction d'un mélange d'une résine époxy et d'un durcisseur, ou dans lequel la résine thermodurcie est une résine polyester (Acide/polyol), une résine polyuréthane (polyol/di-isocyanate), une résine phénol-formaldéhyde, ou une urée-formaldéhyde.

4. Matériau selon la revendication 3, dans lequel le mélange résine époxy/durcisseur est choisi parmi le groupe de couples de précurseurs consistant en le couple epoxy/amine, le couple epoxy/acide, le couple epoxy/anhydride, le couple epoxy/phénol et un mélange de ces composés.

5. Matériau selon l'une quelconque des revendications précédentes, dans lequel le matériau comprend de 50 à 97 % en masse de résine thermodurcie.

6. Matériau selon l'une quelconque des revendications 1 à 5, dans lequel le composé conducteur est sous forme de particules.

7. Matériau selon la revendication 6, dans lequel les particules de composé conducteur ont une taille de 5 nm à 5 $\mu$m.

8. Matériau selon l'une quelconque des revendications précédentes, dans lequel le composé conducteur comprend du noir de carbone ou dans lequel le composé conducteur est constitué de particules de métaux de transition.

9. Matériau selon l'une quelconque des revendications précédentes, dans lequel le matériau comprend de 0,1 à 15 % en masse de composé conducteur.

10. Matériau selon l'une quelconque des revendications précédentes, dans lequel le matériau comprend de 5 à 30 % en masse de composé thermoplastique.

11. Matériau selon l'une quelconque des revendications précédentes, comprenant en outre un renfort.

12. Méthode de fabrication d'un matériau conducteur, comprenant les étapes suivantes :

    a) mélanger un composé conducteur et un composé thermoplastique à l'état fondu ;
    b) mélanger le mélange obtenu à l'étape a) avec un composé thermodurcissable ; et

c) durcir le composé thermodurcissable et séparer le mélange obtenu à l'étape b) en une seconde phase incluant le composé thermoplastique dispersée dans une première phase incluant le composé thermodurcissable, les phases étant bi-continues et le composé conducteur étant localisé à l'interface des première et seconde phases.

**13.** Méthode selon la revendication 12, dans laquelle le mélange de l'étape a) est effectué à un taux de cisaillement de 10 à 1000 s⁻¹.

**14.** Méthode selon la revendication 12 ou la revendication 13, dans laquelle le mélange de l'étape b) comprend la dissolution du mélange obtenu à l'étape a) dans le composé thermo durcissable.

**15.** Méthode selon l'une des revendications 12 à 14, comprenant en outre l'étape suivante :

d) infuser le mélange obtenu à l'étape b) sur un renfort.

**Patentansprüche**

**1.** Leitendes Material, umfassend:

- eine erste Phase, die eine wärmegehärtete Verbindung einschließt,
- eine zweite Phase, vom Volumen geringer, die eine thermoplastische Verbindung einschließt, und
- eine leitende Verbindung,

in welchem:

- die zweite Phase in der ersten Phase dispergiert ist,
- die beiden Phasen bi-kontinuierlich sind, und
- die leitende Verbindung an der Grenzfläche zwischen der ersten und zweiten Phase lokalisiert ist.

**2.** Material nach Anspruch 1, in welchem die wärmegehärtete Verbindung ein wärmegehärtetes Harz umfasst.

**3.** Material nach Anspruch 2, in welchem das wärmegehärtete Harz das Reaktionsprodukt einer Mischung aus einem Epoxidharz und einem Härtungsmittel umfasst, oder in welchem das wärmegehärtete Harz ein Polyesterharz (Säure/Polyol), ein Polyurethanharz (Polyol/Diisocyanat), ein Phenol-Formaldehyd-Harz oder ein Harnstoff-Formaldehyd-Harz ist.

**4.** Material nach Anspruch 3, in welchem die Mischung Epoxidharz/Härtemittel aus der Gruppe von Paaren von Vorprodukten ausgewählt wird, bestehend aus dem Epoxid/Amin-Paar, dem Epoxid/Säure-Paar, dem Epoxid/Anhydrid-Paar, dem Epoxid/Phenol-Paar und einer Mischung aus diesen Verbindungen.

**5.** Material nach einem der vorstehenden Ansprüche, in welchem das Material 50 bis 97 Gew.-% an wärmegehärtetem Harz umfasst.

**6.** Material nach einem der Ansprüche 1 bis 5, in welchem die leitende Verbindung in Form von Partikeln vorliegt.

**7.** Material nach Anspruch 6, in welchem die Partikel der leitenden Verbindung eine Größe von 5 nm bis 5 $\mu$m haben.

**8.** Material nach einem der vorstehenden Ansprüche, in welchem die leitende Verbindung Rußschwarz enthält oder in welchem die leitende Verbindung aus Übergangsmetall-Partikeln gebildet wird.

**9.** Material nach einem der vorstehenden Ansprüche, in welchem das Material 0,1 bis 15 Gew.-% an leitender Verbindung enthält.

**10.** Material nach einem der vorstehenden Ansprüche, in welchem das Material 5 bis 30 Gew.-% an thermoplastischer Verbindung enthält.

**11.** Material nach einem der vorstehenden Ansprüche, das unter anderem eine Verstärkung enthält.

**12.** Methode zur Herstellung eines leitenden Materials, welche die folgenden Schritte umfasst:

a) Vermischen einer leitenden Verbindung und einer thermoplastischen Verbindung im geschmolzenen Zustand;

b) Vermischen der in Schritt a) erhaltenen Mischung mit einer wärmehärtbaren Verbindung; und

c) Härten der wärmehärtbaren Verbindung und Trennen der in Schritt b) erhaltenen Mischung in einer die thermoplastische Verbindung einschließenden zweiten Phase, die dispergiert ist in einer ersten Phase, die die wärmehärtbare Verbindung einschließt, wobei die Phasen bi-kontinuierlich sind und die leitende Verbindung an der Grenzfläche der ersten und zweiten Phase lokalisiert ist.

**13.** Methode nach Anspruch 12, in welcher die Mischung des Schritts a) mit einer Scherrate von 10 bis 1.000 s$^{-1}$ vorgenommen wird.

**14.** Methode nach Anspruch 12 oder Anspruch 13, in welcher die Mischung des Schritts b) die Auflösung der in Schritt a) erhaltenen Mischung in der wärmehärtbaren Verbindung umfasst.

**15.** Methode nach einem der Ansprüche 12 bis 14, die unter anderem den folgenden Schritt umfasst:

d) Aufgießen der in Schritt b) erhaltenen Mischung auf eine Verstärkung.

**Claims**

**1.** A conductive material comprising:

- a first phase including a thermoset compound,
- a second phase, which is smaller in volume, including a thermoplastic compound, and
- a conductive compound,

wherein:

- the second phase is dispersed in the first phase,
- the two phases are bicontinuous, and
- the conductive compound is located at the interface between the first and second phases.

**2.** The material as claimed in claim 1, wherein the thermoset compound comprises a thermoset resin.

**3.** The material as claimed in claim 2, wherein the thermoset resin comprises the product of reaction of a mixture of an epoxy resin and a hardener, or wherein the thermoset resin is a polyester resin (acid/polyol), a polyurethane resin (polyol/diisocyanate), a phenolformaldehyde resin or a urea-formaldehyde resin.

**4.** The material as claimed in claim 3, wherein the epoxy resin/hardener mixture is selected from the group of precursor couples consisting of the epoxy/amine couple, the epoxy/acid couple, the epoxy/anhydride couple, the epoxy/phenol couple and a mixture of these compounds.

**5.** The material as claimed in any one of the preceding claims, wherein the material comprises from 50% to 97% by mass of thermoset resin.

**6.** The material as claimed in any one of claims 1 to 5, wherein the conductive compound is in the form of particles.

**7.** The material as claimed in claim 6, wherein the particles of conductive compound have a size from 5 nm to 5 $\mu$m.

**8.** The material as claimed in any one of the preceding claims, wherein the conductive compound comprises carbon black, or wherein the conductive compound consists of transition metal particles.

**9.** The material as claimed in any one of the preceding claims, wherein the material comprises from 0.1 to 15% by mass of conductive compound.

**10.** The material as claimed in any one of the preceding claims, wherein the material comprises from 5 to 30% by mass of thermoplastic compound.

11. The material as claimed in any one of the preceding claims, further comprising a reinforcement.

12. A method for manufacturing a conductive material, comprising the following steps:

   a) mixing a conductive compound and a thermoplastic compound in the molten state;
   b) mixing the mixture obtained in step a) with a thermosetting compound; and
   c) curing the thermosetting compound and separating the mixture obtained in step b) as a second phase including the thermoplastic compound dispersed in a first phase including the thermosetting compound, the phases being bicontinuous and the conductive compound being located at the interface of the first and second phases.

13. The method as claimed in claim 12, wherein the mixing in step a) is performed at a shear rate of from 10 to 1000 s$^{-1}$.

14. The method as claimed in claim 12 or claim 13, wherein the mixing in step b) comprises the dissolution of the mixture obtained in step a) in the thermosetting compound.

15. The method as claimed in any one of claims 12 to 14, further comprising the following step:

   d) infusing the mixture obtained in step b) onto a reinforcement.

**FIG. 1**

**FIG. 2**

**FIG. 3**

**FIG. 4a**

**FIG. 4b**

**FIG. 5**

**FIG. 6**

**FIG. 7a**              **FIG. 7b**              **FIG. 7c**

2,4 wt.%  3,8 %  5,5%

FIG. 8

FIG. 9

**FIG. 10**

**FIG. 11**

**FIG. 12**

**FIG. 13**

**FIG. 14**

**FIG. 15**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9941304 A

- US 4581158 A

**Littérature non-brevet citée dans la description**

- **RUI SHI ; CHUAN-GUO MA ; MING LIU.** Selective Distribution of Carbon Black in Epoxy resin/Thermoplastic Multiphase Composites. *Advanced Materials Research - Advances in Materials and Materials Processing,* 2013, vol. 652-654, 73-76